# EUROPÄISCHE PATENTSCHRIFT

(11) **EP 2 646 598 B1**
(45) Veröffentlichungstag und Bekanntmachung des Hinweises auf die Patenterteilung: **26.09.2018**
(21) Anmeldenummer: 11788507.9
(22) Anmeldetag: 30.11.2011
(51) Int. Cl.: C23C 18/16, B82Y 30/00, B82Y 40/00, C23C 18/18, C23C 18/31, B01J 13/02

(54) **VERFAHREN ZUR METALLBESCHICHTUNG VON NANOPARTIKELN MITTELS STROMLOSER ABSCHEIDETECHNIKEN**
PROCESS FOR COATING NANOPARTICLES WITH METAL BY MEANS OF ELECTROLESS DEPOSITION TECHNIQUES
PROCÉDÉ DE REVÊTEMENT MÉTALLIQUE DE NANOPARTICULES PAR DES TECHNIQUES DE DÉPÔT AUTOCATALYTIQUE

(30) Priorität: 30.11.2010 DE 102010062184
(43) Veröffentlichungstag der Anmeldung: 09.10.2013
(73) Patentinhaber: Technische Universität Dresden, 01062 Dresden (DE)
(72) Erfinder: LOHE, Martin R., 01187 Dresden (DE); NICKEL, Winfried, 01059 Dresden (DE); GROTHE, Julia, 01099 Dresden (DE); KASKEL, Stefan, 01159 Dresden (DE)
(74) Vertreter: Kailuweit & Uhlemann Patentanwälte Partnerschaft mbB
(86) Internationale Anmeldenummer: PCT/EP2011/071338
(87) Internationale Veröffentlichungsnummer: WO 2012/072658

(56) Entgegenhaltungen:
- EP-A1- 1 772 190
- US-A- 3 367 888
- US-A1- 2002 132 045
- KIM Y T ET AL: "Surface thiolation of carbon nanotubes as supports: A promising route for the high dispersion of Pt nanoparticles for electrocatalysts", JOURNAL OF CATALYSIS, Bd. 238, Nr. 2, 10. März 2006 (2006-03-10) , Seiten 394-401, XP024913233, ACADEMIC PRESS, DULUTH, MN, US ISSN: 0021-9517, DOI: 10.1016/J.JCAT.2005.12.020 [gefunden am 2006-03-10]
- SHOWKAT A M ET AL: "Dispersion of gold nanoparticles into thiol-functionalized carbon nanotubes by gamma-radiation", DIAMOND AND RELATED MATERIALS, Bd. 16, Nr. 8, 1. August 2007 (2007-08-01) , Seiten 1688-1692, XP025318314, ELSEVIER SCIENCE PUBLISHERS, AMSTERDAM, NL ISSN: 0925-9635, DOI: 10.1016/J.DIAMOND.2007.01.025 [gefunden am 2007-05-25]
- DATABASE WPI Week 200931 Thomson Scientific, London, GB; AN 2009-H78268 XP002713121, -& WO 2009/054371 A1 (UBE NITTO KASEI CO) 30. April 2009 (2009-04-30)

## Beschreibung

Die vorliegende Erfindung betrifft ein Verfahren zur Metallbeschichtung von Nanopartikeln mittels stromloser Abscheidetechnik zur Verwendung in Metall-Matrix-Kompositen.

Allen aus dem Stand der Technik bekannten Verfahren zur Herstellung metallbeschichteter Substrate ist gemein, dass eine homogene Metallbeschichtung nur für makroskopische Substrate und Strukturen mit einer Größe ab etwa 1-10 *µm* möglich ist. Die Aktivierung der Substrate erfolgt dabei meist mit einer Sensibilisierung der Oberfläche mittels Edelmetallnanopartikeln, bevorzugt mittels Pt, welche als Katalysatoren für die stromlose Metallabscheidung benötigt werden (S. S. Djokic, Modern Aspects of Electrochemistry 2002, 35, S. 51, D. Zabetakis, W. J. Dressick, Applied Materials & Interfaces 2009, 1(1), S. 4)*.*

Für nanopartikuläre Substrate eignet sich eine Aktivierung mit Edelmetallnanopartikeln nicht, oder nur unter extrem großen Materialaufwand. Für die stromlose Abscheidung nach etablierten Methoden werden metallische Katalysatoren benötigt. Da für den metallischen Charakter und die damit einhergehende katalytische Aktivität eine gewisse Größe gegeben sein muss, kann die Edelmetall-Bekeimung nicht mit beliebig kleinen Partikeln vorgenommen werden. Eine Aktivierung von nanopartikulären Substraten erfolgt somit bei geringem Edelmetallaufwand immer inhomogen, weil nicht alle Substratpartikel im gleichen Maße aktiviert werden können. Bei hoher Edelmetallbeladung hingegen steigen die Herstellungskosten um ein Vielfaches.

Y. Lu (Applied Surface Science 2009, 255, S. 8430*)* beschreibt die stromlose Kupferabscheidung auf 3-Mercaptopropyltriethoxysilan-funktionalisierten Polyethylenterephthalat (PET). Hierbei wird in einem zweistufigen Prozess zunächst 3-Aminopropylmethoxysilan an der Oberfläche des Polymersubstratsaufgebracht und durch Erhitzen eine Silikatschicht erzeugt. Auf der Silikatschicht wird dann 3-Mercaptopropyltriethoxysilan angebunden und erneut erhitzt. Die Kupferabscheidung erfolgt im Anschluss in einem Beschichtungsbad basierend auf Kupferchlorid, Borsäure und EDTA mit Dimethylaminoboran als Reduktionsmittel bei 60 °C für 4 Stunden.

Nachteilig ist das von Y. Lu das als Reduktionsmittel, verwendete Dimethylaminoboran sehr teurer und außerdem luftempfindlich ist, sodass es unter Schutzgas aufbewahrt werden muss.

J. Samuel et al. (Mater. Res Soc. Symp. Proc. 1207: 103-108) beschreiben ein Verfahren zur Herstellung von Metallclustern auf SiO₂-Nanopartikeln durch Autoreduktion. Die Metallclusterabscheidung fand nur statt, wenn die SiO₂-Nanopartikel sowohl mit Aminogruppen und Thiolgruppen modifiziert war.

EP 1 772 190 A1 offenbart ein Verfahren zur Erzeugung von Katalysatoren umfassend die Anbindung eines Metallatoms auf einem Trägermaterial, bevorzugt Platin bzw. Ruthenium auf mehrwandigen Kohlenstoffnanoröhren oder Ruß, auf dem Thiolgruppen aufgebracht wurden. Das Trägermaterial kann ein Kohlenstoff- oder Oxidträgermaterial sein.

Kim et al. (Jornal of Catalysis 2006, 238: 394-401) offenbart die Modifizierung der Oberflächen von Kohlenstoffnanoröhren mit Thiolgruppen als Trägermaterialien. Die modifizierten Oberflächen dienen der Verteilung von Pt-Nanopartikeln zur Elektrokatalyse.

Showakat et al. (Diamond and related materials 2007, 16: 1688-1692) offenbart ein Verfahren zur Beschichtung von mehrwandigen Kohlenstoffna-noröhren mit Goldnanopartikeln durch Thiolmodifizierung mittels γ-Bestrahlung, wobei die Thiolmodifizierung die Agglomeration der Goldnanopartikel verhindern soll. Die γ-Bestrahlung dient der Reduzierung der Goldionen ohne Reduktionsmittel.

US 3,367,888 A beschreibt ein Verfahren zur Herstellung eines Katalysators aus einem Metalloxid, enthaltend ein Metall der Gruppe VIII des PSEs und eine Schwefel-haltige Carbonsäure, z. B. Mercaptoessigsäure, durch Reduktion mittels Wasserstoffatmosphäre bei Temperaturen von 200°F bis 2000°F.

WO 2009/054371 A1 offenbart ein Verfahren zur Beschichtung nicht-leitender Partikel mit einer Partikelgröße von 0,5 bis 100 µm, bevorzugt 1 bis 20 µm, mit Gold und Silber unter Zusatz eines Silans mit einer Thiolgruppe.

US 2002/0132045 A1 und US 2003/0164064 A1 offenbaren Verfahren zur Herstellung einer Metall-Nanohülle auf speziell funktionalisierten SiO₂-Nanopartikeln. US 2003/0118657 offenbart die Verwendung von derart funktionalisierten Nanopartikeln zur Reduzierung oder Verhinderung der Neubildung von Blutgefäßen (Vaskularisierung). EP 1936 378 A1 offenbart mehrschichtige Nanopartikel mit einem magnetischen Kern, den eine SiO₂-Schicht umgibt, welche wiederum durch eine Goldschicht und ggf. zusätzliche Metallschichten umgeben ist. Als äußere Schicht sind auf den Nanopartikeln Biosensormoleküle (wie z. B. Aptamere) immobilisiert. Die Herstellung der Metallschicht erfolgt in den Schriften jeweils in dem die Silikat-Oberfläche zunächst mit einem Aminosilan-Linker funktionalisiert wird und anschließend Gold-Kolloidpartikel gebunden werden. An die so modifizierte Oberfläche können anschließend andere Metalle reduktiv abgeschieden werden.

Homogene Metallabscheidungen von Nickel und Kupfer auf Nanopartikeln sind bisher nicht bekannt.

Metall-Matrix-Komposite enthalten eine zusammenhängende Metallmatrix mit einer diskontinuierlichen keramischen oder organischen Verstärkung in ihrem Inneren und verbinden die Eigenschaften von Metallen, wie z. B. Zähigkeit, Wärmeleitfähigkeit und Bearbeitbarkeit mit denen von Keramiken wie z. B. Steifigkeit, Festigkeit und geringe Wärmeausdehnung. Ihre herausragenden und maßgeschneiderten Eigenschaftskombinationen machen Metallmatrix-Komposite zu vielseitig einsetzbaren Werkstoffen, welche beispielsweise in der Automobilindustrie, in der Luft- und Raumfahrttechnik, in der Halbleiterindustrie und in der Medizintechnik zum Einsatz kommen. Für die Anwendung der metallbeschichteten Nanopartikel als Füllstoffe in Metall-Matrix-Kompositen ist eine homogene Metallbeschichtung der Nanopartikel essentiell, um deren Einbringung in die Metallmatrix zu erleichtern.

Die Aufgabe der vorliegenden Erfindung ist es, ein einfaches, vielseitiges und möglichst kostengünstiges Verfahren zur homogenen Metallbeschichtung von Nanopartikeln zur Verfügung zu stellen. Der Prozess soll dabei auf die Verwendung teurer Edelmetallsalze und Reduktionsmittel verzichten und in Wasser als Lösungsmittel und möglichst bei niedrigen Temperaturen durchführbar sein. Die homogen metallbeschichteten Nanopartikel sollen sich insbesondere für die Verwendung als Füllstoffe in Metall-Matrix-Kompositen eignen, wobei die abgeschiedene Metallschicht als Dispersionsvermittler zwischen nichtmetallischen Nanopartikeln und Metallmatrix genutzt werden kann, wodurch die Herstellung solcher Komposite vereinfacht werden soll.

Erfindungsgemäß wird die Aufgabe gelöst durch ein Verfahren zur Herstellung metallbeschichteter anorganischer Nanopartikel bei dem man,
a) die Oberfläche der Nanopartikel thiolfunktionalisiert,
b) anschließend die Nanopartikel mit einer wässrigen Metallsalzlösung in Kontakt bringt und
c) dann durch Zugabe eines Reduktionsmittels die Metallsalzlösung reduziert, wodurch es zu einer Metallabscheidung auf den Nanopartikeln kommt,
wobei die Nanopartikel kugelförmige oder sphärische Partikel sind,
wobei Nanopartikel aus oxidischen Partikeln verwendet werden, und
wobei der Durchmesser der Partikel unter 100 nm liegt und
wobei man im Verfahrensschritt b) zusätzlich Komplexbildner zusetzt,
wobei Komplexbildner aus EDTA, Gluconsäure, Tartrat, Glycolsäure, Citrat, Succinat, Ethylendiamin und Saccharose ausgewählt sind,
wobei das Reduktionsmittel Hydrazin ist.

Durch eine Thiolfunktionalisierung der Substratoberfläche wird eine gerichtete Metallabscheidung auf den Nanopartikeln begünstigt.

Die Erfindung stellt damit ein Verfahren zur Verfügung, mit dessen Hilfe ein günstigerer Metallisierungsprozess verglichen mit der konventionellen Edelmetallaktivierung ermöglicht wird. Die Einbringung metallisierter Nanopartikel in Metalle sollte gegenüber unfunktionalisierten Partikeln, bei welchen Agglomeratbildung auftritt, erleichtert sein, was die Herstellungskosten von Metall-Matrix-Kompositen deutlich verringert.

Erfindungsgemäß werden Nanopartikel aus anorganischen Verbindungen verwendet. Erfindungsgemäß sind die Nanopartikel aus oxidischen Partikeln, bevorzugt aus SiO₂ oder Al₂O₃. Der Begriff Nanopartikel umfasst annähernd kugelförmige oder sphärische Partikel. Die Abmessungen der Nanopartikeln liegen in mindestens zwei Dimensionen unter 100 nm, bevorzugt im Bereich 20 bis 50 nm. Erfindungsgemäß liegt der Durchmesser der annähernd kugelförmigen oder sphärischen Partikel unter 100 nm, bevorzugt im Bereich 20 bis 50 nm.

Die für die Abscheidung verwendeten Metallsalze sind ausgewählt aus Ni- und Cu-Salzen, sowie Salzen von Metallen aus der Gruppe 15 des Periodensystems der Elemente (PSE) sowie Cd, Co, Cr, Sn, Pb, Zn, Fe und Al sowie die Mischungen Cu/Zn, Cu/Fe, Cu/Al, Sn/Cu, Ni/Fe, Cu/Cd, Pb/Sn, Ni/V, Ni/Mo, Ni/W, Ni/Mn, Ni/Zn, Co/V, Co/Mo, Co/W, Co/Mn, Co/Fe, Co/Zn, Co/V, Cu/Mo, Cu/W und Cu/Mn, bevorzugt sind Cu und Ni. Auch binäre, ternäre und quaternäre Gemische dieser Metalle sind umfasst.

Die Synthese der metallbeschichteten Nanopartikel erfolgt durch Reduktion eines Metallsalzes oder mehrerer Metallsalze und anschließender Abscheidung des Metalls oder der Metalle auf der thiolfunktionalisierten Oberfläche der Nanopartikel. Erfindungsgemäß ist das Reduktionsmittel Hydrazin. Zur Reduktion wird bei Cu bevorzugt Hydrazin, bei Ni, Co, Cr, Sn, Pb, Sb, Bi, Zn, Cu, Fe, Al oder Mischungen dieser bevorzugt eine Mischung von Natriumborhydrid mit Hydrazin verwendet. Da alle verwendeten Reduktionsmittel luftstabil sind muss vorteilhaft im erfindungsgemäßen Verfahren in Schritt c) nicht unter Schutzgasatmosphäre gearbeitet werden.

Durch Zugabe des Reduktionsmittels wird vorzugsweise mehr als 90% der Metallsalzlösung, besonders bevorzugt mehr als 99% der Metallsalzlösung, ganz besonders bevorzugt die gesamte Metallsalzlösung reduziert. Die Schichtdicke der Metallbeschichtung ist hierbei variabel und abhängig von der Menge und Konzentration der eingesetzten Metallsalzlösung.

Bevorzugt werden bei oxidischen Partikeln vor Verfahrensschritt a) Hydroxidgruppen auf der Oberfläche der Nanopartikel generiert, vorzugsweise durch Behandlung mit Säuren, insbesondere Mineralsäuren, bevorzugt ausgewählt aus H₂SO₄, HNO₃, HCl, HBr, HF und HI oder Basen, bevorzugt ausgewählt aus KOH und NaOH.

Die Thiolfunktionalisierung in Verfahrensschritt a) erfolgt insbesondere bei oxidischen Partikeln (wie SiO₂, Al₂O₃) durch (mindestens) ein Mercaptoorganylsilan. Bevorzugt wird als Mercaptoorganylsilan ein Mercaptoalkoxysilan oder ein Mercaptoaryloxysilan gewählt. Vorteilhaft kann hier die Thiolfunktionalisierung bei Temperaturen von 0 bis 100°C oder auch Raumtemperatur durchgeführt werden.

Das Mercaptoorganylsilan hat bevorzugt die allgemeine Formel (HS-R^{a})ₙSi(O-R^{b})ₘ mit m = 4 - n und n = 1 bis 3, bevorzugt 1 oder 2. Die einzelnen Reste R^{a} sind unabhängig voneinander ausgewählt sind aus Alkdiyl und Ardiyl (zweiwertigen Alkyl- bzw. Aryl-Resten) bevorzugt mit jeweils 1 bis 7, bevorzugt 2 bis 5 C-Atomen, besonders bevorzugt -CH₂-CH₂-, -CH₂-CH₂-CH₂-und -CH₂-CH₂-CH₂-CH₂-, ganz besonders bevorzugt -CH₂-CH₂-CH₂-. Die einzelnen Reste R^{b} sind unabhängig voneinander ausgewählt sind aus Alkyl und Aryl bevorzugt mit jeweils 1 bis 7, bevorzugt 1 bis 4 C-Atomen, besonders bevorzugt -CH₃, -CH₂-CH₃ und -CH₂-CH₂-CH₃.

Verfahrensschritt b) des erfindungsgemäßen Verfahrens erfolgt bei Temperaturen von 0 bis 80°C, vorzugsweise bei 0 bis 30°C, besonders bevorzugt bei 20 bis 25°C. Die Temperatur hat maßgeblichen Einfluss auf die Abscheidegeschwindigkeit des Metalls bzw. der Metalle auf der Oberfläche der Nanopartikel. Vorteilhaft ermöglicht das erfindungsgemäße Verfahren bereits eine Metallabscheidung auf der Oberfläche der Nanopartikel bei 0°C. Weiter vorteilhaft kann das erfindungsgemäße Verfahren bei Raumtemperatur durchgeführt werden.

Das in der vorliegenden Erfindung beschriebene Verfahren ermöglicht eine preisgünstige Herstellung von äußerst homogen metallbeschichteten Nanopartikeln. Durch Zugabe eines Komplexbildners in Verfahrensschritt b), ausgewählt aus der Gruppe EDTA (Ethylendiamintetraessigsäure), Gluconsäure, Tartrat, Glycolsäure, Citrat, Succinat, Ethylendiamin oder Saccharose, kann das Ergebnis der Metallbeschichtung bezüglich ihrer Homogenität deutlich gesteigert und die Hydroxidbildung, besonders bei Hydrazin, gesenkt werden. Die Metallbeschichtung funktioniert jedoch grundsätzlich auch ohne Zugabe eine Komplexbildners in Verfahrensschritt b).

Die erfindungsgemäßen metallbeschichteten Nanopartikel eignen sich aufgrund der verbesserten Benetzung der Nanopartikel mit Metall besonders als Füllstoffe in Metall-Matrix-Kompositen.

Die Thiolfunktionalisierung kann je nach Partikelart auf unterschiedliche Art und Weise erfolgen wie in folgender Tabelle gezeigt ist:

| Substratsystem | Vorbehandlung | Thiolfunktionalisierung |
|---|---|---|
| Oxidische Partikel (SiO₂, Al₂0₃ etc.) | Mineralsäuren (Generierung von Oberflächen-OH-Gruppen) | Mercaptoorganylsilan |

Die Metallbeschichtung der thiolfunktionalisierten Partikel erfolgt in wässrigen Beschichtungsbädern bevorzugt mit folgender grundlegender Zusammensetzung:

| Beschichtungsmetall | Reduktionsmittel | Stabilisator | Temperatur |
|---|---|---|---|
| Cu | Hydrazin (N₂H₄) | EDTA, Gluconsäure, Tartrat, Glycolsäure, Citrat, Succinat oder Saccharose, | 0-80 °C |
| Ni, Co, Cr, Sn, Pb, Sb, Bi, Cu/Zn, Cu/Fe, Cu/Al, Sn/Cu, Ni/Fe | Natriumborhydrid (NaBH₄) + Hydrazin | EDTA, Citrat, Tartrat oder Ethylendiamin | 0-80 °C |

Anhand der folgenden Ausführungsbeispiele soll die Erfindung näher erläutert werden ohne die Erfindung auf diese zu Beschränken.

### 1) Thiolbeschichtung von SiO₂ (Analog für Al₂O₃ und andere Oxide)

5g SiO₂-Nanopartikel werden in 800 ml Wasser dispergiert. Je nach spezifischer Oberfläche (Abhängig von Größe der eingesetzten Partikel) werden 100 bis 1000µl MPTES (Mercaptopropyltriethoxysilan) je 100 m² Partikeloberfläche in wenig Ethanol gelöst und zur Dispersion gegeben. Die Mischung wird einige Stunden unter Rückfluss gekocht und die erhaltene Dispersion für die Metallbeschichtung aufbewahrt.

### 2) Kupferbeschichtung:

In 1L einer wässrigen Dispersion thiolfunktionalisierter SiO₂-Nanopartikel (-0,1 Mol/L) werden 0,1 Mol CuSO₄·5H₂O und 0,025 Mol EDTA gelöst. 1 Mol Hydrazin (z. B. 80%ige Hydrazinlösung) werden bei Raumtemperatur mit einem mal hinzugegeben. Erhalten wird eine schwarze Dispersion. Die Partikel werden durch Zentrifugation abgetrennt und unter Schutzgas (N₂ oder Ar) oder unter Vakuum getrocknet. (Analog für alle folgenden metallbeschichteten Partikel)

10 g Al₂O₃-Nanopartikel (thiolfunktionalisiert mit 0,52 g MPTES) + 40g CuSO₄·5H₂O (∼10g Cu) + 29,77g EDTA werden in 3L Wasser mit ca. 100 ml Hydrazin-Lösung (80%ig) versetzt und auf 25 bis 90 °C getempert (Zugabe bei Raumtemperatur, danach Erhöhung auf 90°C).

### 3) Nickelbeschichtung:

0,5 Moläquivalente thiolfunktionalisierte SiO₂ -Nanopartikel und 1 Moläquivalent NiCl₂ werden in Wasser mit 0,25-0,5 Moläquivalenten NaBH₄ (vorher in wenig Wasser gelöst) versetzt. Anschließend (je nach Stoffmenge/Reaktionsvolumen nach etwa 2 bis 25 Minuten) wird die Lösung mit KOH auf einen pH von 9 bis 14 eingestellt und für die weitere Abscheidung 2,5 bis 10 Moläquivalente Hydrazin zugegeben.

Die erfolgreiche Beschichtung wird zunächst optisch hinsichtlich der Homogenität der erhaltenen Pulver beurteilt, bspw. werden aus vormals weißen Partikeln (SiO₂, Al₂O₃) schwarze bis braune Cu-beschichtete Partikel erhalten, wobei schwarze Partikel auf sehr nanoskalige Produkte und zunehmend braune Partikel auf teilweise aggregierte Produkte hindeuten.

Die Zusammensetzung und mittleren Kristallitgrößen (nach Debye-Scherrer) der abgeschiedenen Metalle lassen sich mittels Röntgenpulverdiffraktometrie feststellen. Im Falle röntgenamorpher Proben kann eine Kristallisation durch Nachtempern unter Schutzgas erfolgen (v. a. Nickel wird manchmal amorph abgeschieden). Der tatsächlich abgeschiedene Metallgehalt kann mittels energiedispersiver Röntgenspektroskopie (EDX) ermittelt werden. Die Dicke und Struktur der abgeschiedenen Metalle/Schichten lässt sich mittels Transmissionelektronenmikroskopie (TEM) untersuchen.

Mit den erfindungsgemäß metallisierten Partikeln wurden Fülldrähte hergestellt und Schweißversuche damit durchgeführt. Vorteilhaft war für die beschichteten Nanopartikel keine Auflösung/Zersetzung in der Metallmatrix zu beobachten (im Gegensatz zu unmetallisierten Nanopartikeln).

Metallsalze, Massen und pH-Wert bei Abscheidung:

| | | |
|---|---|---|
| BiCl₃ | 7,25 g | pH=5 (eingestellt mit HCl) |
| SbCl₃ | 9 g | ph=5 (eingestellt mit HCl |
| SnCl₂ | 9 g | pH=5 (eingestellt mit HCl) |
| CuSO₄·5 H₂O +ZnCl₂ | 9 g | Keine pH-Einstellung |
| | 5 g | |
| CuSO₄·5 H₂O +AlCl₃ | 9 g | Keine pH-Einstellung |
| | 11,4 g | |
| CuSO₄·5 H₂O +SnCl₂ | 9 g | Keine pH-Einstellung |
| | 4,5 g | |

Die erfolgreiche Beschichtung wird zunächst optisch hinsichtlich der Homogenität der erhaltenen Pulver beurteilt, bspw. werden aus vormals weißen Partikeln (SiO₂, Al₂O₃) schwarze bis braune Cu-beschichtete Partikel erhalten, wobei schwarze Partikel auf sehr nanoskalige Produkte und zunehmend braune Partikel auf teilweise aggregierte Produkte hindeuten).

Die Zusammensetzung und mittleren Kristallitgrößen (nach Debye-Scherrer) der abgeschiedenen Metalle lassen sich mittels Röntgenpulverdiffraktometrie feststellen. Im Falle röntgenamorpher Proben kann eine Kristallisation durch Nachtempern unter Schutzgas erfolgen (v. a. Nickel wird manchmal amorph abgeschieden). Der tatsächlich abgeschiedene Metallgehalt kann mittels energiedispersiver Röntgenspektroskopie (EDX) ermittelt werden. Die Dicke und Struktur der abgeschiedenen Metalle/Schichten lässt sich mittels Transmissionelektronenmikroskopie (TEM) untersuchen.

Mit den erfindungsgemäß metallisierten Partikel wurden Fülldrähte hergestellt und Schweißversuche damit durchgeführt. Vorteilhaft war für die beschichteten Nanopartikel keine Auflösung/Zersetzung in der Metallmatrix zu beobachten war (im Gegensatz zu unmetallisierten Nanopartikeln).

## Patentansprüche

1. Verfahren zur Metallbeschichtung von anorganischen Nanopartikeln, mit den Schritten
a) Thiolfunktionalisierung der Oberfläche der Nanopartikel,
b) Inkontaktbringen der Nanopartikel mit einer wässrigen Metallsalzlösung, die mindestens ein Metallsalz eines Metalls ausgewählt aus Ni, Cu, Co, Zn, Cd, Cr, Sn, Pb, Fe, Al und Metallen der Gruppe 15 des Periodensystems der Elemente enthält, und
c) Zugabe eines Reduktionsmittels, welches die Metallsalzlösung reduziert, wodurch es zu einer Metallabscheidung auf den Nanopartikeln kommt,
wobei die Nanopartikel kugelförmige oder sphärische Partikel sind,
wobei Nanopartikel aus oxidischen Partikeln verwendet werden, und
wobei der Durchmesser der Partikel unter 100 nm liegt und
wobei man im Verfahrensschritt b) zusätzlich Komplexbildner zusetzt,
**dadurch gekennzeichnet, dass** Komplexbildner aus EDTA, Gluconsäure, Tartrat, Glycolsäure, Citrat, Succinat, Ethylendiamin und Saccharose ausgewählt sind und das Reduktionsmittel Hydrazin ist.

2. Verfahren nach Anspruch 1, **dadurch gekennzeichnet dass** man Nanopartikel aus SiO₂ oder Al₂O₃ verwendet.

3. Verfahren nach einem der Ansprüche 1 bis 2, **dadurch gekennzeichnet, dass** man als Reduktionsmittel bei Cu Hydrazin verwendet.

4. Verfahren nach einem der Ansprüche 1 bis 2, **dadurch gekennzeichnet dass** man als Reduktionsmittel bei Ni, Co, Cr, Sn, Pb, Sb, Bi, Zn, Cu, Fe, Al oder Mischungen dieser eine Mischung von Natriumborhydrid mit Hydrazin verwendet.

5. Verfahren nach einem der Ansprüche 1 bis 4, **dadurch gekennzeichnet, dass** durch Zugabe des Reduktionsmittels vorzugsweise mehr als 90 % der Metallsalzlösung reduziert wird, besonders bevorzugt mehr als 99 % der Metallsalzlösung reduziert wird, ganz besonders bevorzugt die gesamte Metallsalzlösung reduziert wird.

6. Verfahren nach einem der Ansprüche 1 bis 5, **dadurch gekennzeichnet, dass** man auf der Oberfläche der Nanopartikel vor Verfahrensschritt a) Hydroxidgruppen generiert, vorzugsweise durch Behandlung mit Mineralsäuren, bevorzugt ausgewählt aus H₂SO₄, HNO₃, HCl, HBr, HF und HI, oder Basen, bevorzugt ausgewählt aus KOH und NaOH.

7. Verfahren nach einem der Ansprüche 1 bis 6, **dadurch gekennzeichnet, dass** die Thiolfunktionalisierung in Verfahrensschritt a) durch ein Mercaptoorganylsilan erfolgt.

8. Verfahren nach einem der Ansprüche 1 bis 7, **dadurch gekennzeichnet, dass** Verfahrensschritt b) bei Temperaturen von 0 bis 80 °C, vorzugsweise bei 10 bis 50 °C, besonders bevorzugt bei 20 bis 25 °C, erfolgt.

9. Verwendung eines Verfahren nach einem der Ansprüche 1 bis 8 zur Herstellung von Füllstoffen für Metall-Matrix-Komposite.

## Claims

1. Method for coating inorganic nanoparticles with metal, comprising the steps of:
a) thiol-functionalising the surface of the nanoparticles;
b) bringing the nanoparticles into contact with an aqueous metal salt solution which contains at least one metal salt of a metal selected from Ni, Cu, Co, Zn, Cd, Cr, Sn, Pb, Fe, Al and metals of group 15 of the periodic table; and
c) adding a reducing agent which reduces the metal salt solution, resulting in metal deposition on the nanoparticles,
the nanoparticles being globular or spherical particles,
nanoparticles of oxidic particles being used, and
the diameter of the particles being less than 100 nm, and
additional complexing agents being added in method step b),
**characterised in that** the complexing agents are selected from EDTA, gluconic acid, tartrate, glycolic acid, citrate, succinate, ethylene diamine and sucrose
and the reducing agent is hydrazine.

2. Method according to claim 1, **characterised in that** nanoparticles of SiO₂ or Al₂O₃ are used.

3. Method according to either claim 1 or claim 2, **characterised in that** hydrazine is used as the reducing agent for Cu.

4. Method according to either claim 1 or claim 2, **characterised in that** a mixture of sodium borohydride and hydrazine is used as the reducing agent for Ni, Co, Cr, Sn, Pb, Sb, Bi, Zn, Cu, Fe, Al or mixtures thereof.

5. Method according to any of claims 1 to 4, **characterised in that** preferably more than 90% of the metal salt solution, particularly preferably more than 99% of the metal salt solution, most particularly preferably the entire metal salt solution, is reduced by adding the reducing agent.

6. Method according to any of claims 1 to 5, **characterised in that** hydroxide groups are generated on the surface of the nanoparticles before method step a), preferably by treating with mineral acids, preferably selected from H₂SO₄, HNO₃, HCI, HBr, HF and HI, or bases, preferably selected from KOH and NaOH.

7. Method according to any of claims 1 to 6, **characterised in that** the thiol-functionalisation in method step a) is carried out by a mercapto organosilane.

8. Method according to any of claims 1 to 7, **characterised in that** method step b) is carried out at temperatures of from 0 to 80°C, preferably 10 to 50°C, particularly preferably 20 to 25°C.

9. Use of a method according to any of claims 1 to 8 for preparing fillers for metal-matrix composites.

## Revendications

1. Procédé de revêtement métallique de nanoparticules minérales, comprenant les étapes suivantes
a) fonctionnaliser la surface des nanoparticules avec des groupements thiol,
b) mettre en contact les nanoparticules avec une solution aqueuse de sel métallique contenant au moins un sel métallique d'un métal choisi parmi Ni, Cu, Co, Zn, Cd, Cr, Sn, Pb, Fe, Al, et les métaux du groupe 15 du Tableau Périodique des Éléments, et
c) ajouter un agent réducteur qui réduit la solution de sel métallique de façon à obtenir un dépôt de métal sur les nanoparticules,
les nanoparticules étant des particules sphériques ou en forme de bille,
des nanoparticules de particules oxydiques étant utilisées, et
le diamètre des particules étant inférieur à 100 nm et
des agents complexants étant en plus ajoutés à l'étape de procédé b),
**caractérisé en ce que** les agents complexants sont choisis parmi l'EDTA, l'acide gluconique, le tartrate, l'acide glycolique, le citrate, le succinate, l'éthylènediamine et le saccharose et **en ce que** l'agent réducteur est l'hydrazine.

2. Procédé selon la revendication 1, **caractérisé en ce que** l'on utilise des nanoparticules de SiO₂ ou d'Al₂O₃.

3. Procédé selon l'une des revendications 1 à 2, **caractérisé en ce que** l'on utilise l'hydrazine comme agent réducteur pour Cu.

4. Procédé selon l'une des revendications 1 à 2, **caractérisé en ce que** l'on utilise un mélange de borohydrure de sodium avec de l'hydrazine comme agent réducteur pour Ni, Co, Cr, Sn, Pb, Sb, Bi, Zn, Cu, Fe, Al ou des mélanges de ceux-ci.

5. Procédé selon l'une des revendications 1 à 4, **caractérisé en ce que** l'ajout de l'agent réducteur permet de réduire de préférence plus de 90 % de la solution de sel métallique, de manière particulièrement préférée de plus de 99 % de la solution de sel métallique, de manière tout particulièrement préférée toute la solution de sel métallique.

6. Procédé selon l'une des revendications 1 à 5, **caractérisé en ce que** l'on génère des groupes hydroxydes sur la surface des nanoparticules avant l'étape de procédé a), de préférence par traitement avec des acides minéraux, de préférence choisis parmi H₂SO₄, HNO₃, HCl, HBr, HF et Hl, ou des bases, de préférence choisies parmi KOH et NaOH.

7. Procédé selon l'une des revendications 1 à 6, **caractérisé en ce que** la fonctionnalisation avec des groupements thiol à l'étape de procédé a) est effectuée par un mercaptoorganylsilane.

8. Procédé selon l'une des revendications 1 à 7, **caractérisé en ce que** l'étape de procédé b) est effectuée à des températures allant de 0 à 80°C, de préférence de 10 à 50°C, de manière particulièrement préférée de 20 à 25°C.

9. Utilisation d'un procédé selon l'une des revendications 1 à 8 pour la préparation de charges destinées à des composites à matrice métallique.
